# EUROPÄISCHE PATENTANMELDUNG

(11) **EP 4 644 049 A1**
(43) Veröffentlichungstag der Anmeldung: **05.11.2025**
(21) Anmeldenummer: 25171994.4
(22) Anmeldetag: 23.04.2025
(51) Int. Cl.: B25F 5/02, A01D 34/90, B25F 5/00

(54) **ARBEITSGERÄT MIT EINEM SCHAFT UND EINEM AKKUPACK**

(30) Priorität: 30.04.2024 DE 102024112209
(71) Anmelder: Andreas Stihl AG & Co. KG, 71336 Waiblingen (DE)
(72) Erfinder: Theile, Marc, 73249 Wernau (DE); Angelusch, Anton, 71336 Waiblingen (DE); Deimling, Christian, 70736 Fellbach (DE); Kummermehr, Stefan, 73663 Berglen (DE); Maier, Alexander, 72218 Wildberg (DE); Schmidt, Christian, 71409 Schwaikheim (DE)
(74) Vertreter: Reinhardt, Annette

(57) **Zusammenfassung**

Die Erfindung betrifft ein Arbeitsgerät (1) umfassend einen Schaft (2), ein von einem Elektromotor (3) angetriebenes Werkzeug (4) und einen Akkupack (6) für den Elektromotor (3), wobei der Schaft (2) an einem Ende (7) das Werkzeug (4) trägt und am anderen Ende (8) ein Gehäuse (5). Im Gehäuse (5) ist ein Aufnahmeschacht (10) für den Akkupack (6) vorgesehen, der durch Seitenwände (11, 12, 13) begrenzt ist. Jede Seitenwand (11, 12, 13) des Aufnahmeschachtes (10) ist durch einen Rand (21, 22, 23, 24) begrenzt, wobei zumindest eine Gehäuseseite (37) des Gehäuses (5) mit Abstand zu einer Seitenwand (13) des Aufnahmeschachtes (10) liegt. Nach der Erfindung ist vorgesehen, dass die zumindest eine Gehäuseseite (37) größer ist als die Seitenwand (13) des Aufnahmeschachtes (10), und die zumindest eine Gehäuseseite (13) an den Rändern (23, 24) der Seitenwand (13) einen geringeren Abstand (a, b) zur Seitenwand (13) aufweist als in einem Bereich (15) zwischen den Rändern (23, 24) der Seitenwand (13).

## Beschreibung

Die Erfindung betrifft ein Arbeitsgerät umfassend einen Schaft, ein von einem Elektromotor angetriebenes Werkzeug und einen Akkupack für den Elektromotor. Der Schaft trägt an einem Ende das Werkzeug und am anderen Ende ein Gehäuse mit einem im Gehäuse angeordneten Aufnahmeschacht für den Akkupack. Der Aufnahmeschacht des Akkupacks ist durch Seitenwände begrenzt, wobei eine der Seitenwände einen Boden des Aufnahmeschachtes bilden kann. Jede Seitenwand des Aufnahmeschachtes ist durch einen Rand begrenzt, wobei zumindest eine Gehäuseseite des Gehäuses mit Abstand zu einer Seitenwand des Aufnahmeschachtes liegt.

Ein derartiges Arbeitsgerät kann ein Freischneider, ein Hochentaster oder dergleichen Schaftgerät sein. Bei der Benutzung kommt es immer wieder vor, dass das Arbeitsgerät aus einer Fallhöhe auf den Boden fällt, was zu Schäden insbesondere am Gehäuse und dem im Gehäuse ausgebildeten Aufnahmeschacht für den Akkupack führen kann.

Der Erfindung liegt die Aufgabe zugrunde, das Gehäuse eines Arbeitsgerätes derart auszubilden, dass auch bei großen Fallhöhen eine Beschädigung insbesondere des Akkuschachtes vermieden ist.

Die Aufgabe wird dadurch gelöst, dass zumindest eine Gehäuseseite größer ausgebildet ist als eine Seitenwand des Aufnahmeschachtes und die zumindest eine Gehäuseseite an den Rändern der einen Seitenwand einen geringeren Abstand zur Seitenwand aufweist als in einem Bereich zwischen den Rändern der Seitenwand. Die zumindest eine Gehäuseseite des Gehäuses kann insbesondere eine gewölbte Grundform aufweisen.

Eine ausgeführte Wölbung hat eine vorzugsweise stetig gewölbte Grundform. Vorteilhaft ist eine konvexe Grundform gewählt.

Durch diese besondere Ausgestaltung der zumindest einen Gehäuseseite des Gehäuses ist die eine Seitenwand des Aufnahmeschachtes vor direkter Krafteinwirkung geschützt. Fällt das Arbeitsgerät mit der zumindest einen Gehäuseseite aus einer Fallhöhe auf den Boden, kann sich die Gehäuseseite verformen, ohne dass ein Kontakt und damit eine Krafteinwirkung auf die eine Seitenwand des Aufnahmeschachtes auftritt.

Der Akkupack versorgt den Elektromotor, der das Werkzeug antreibt, mit Energie.

Durch die gewölbte Form der zumindest einen Gehäuseseite, insbesondere durch deren konvexe Form, wird erreicht, dass bei einem Fall auf den Boden der erhöhte Bereich der Gehäuseseite den ersten Bodenkontakt erfährt, also der Bereich der Gehäuseseite, der den größten Abstand von der Seitenwand des Aufnahmeschachtes hat. Bei einer Verformung der Gehäuseseite ist durch den Abstand ist gewährleistet, dass ein Kontakt mit der Seitenwand des Aufnahmeschachtes weitgehend vermieden ist. Die auf die Gehäuseseite wirkenden Kräfte werden in die Randbereiche des Gehäuses eingeleitet.

Die Gehäuseseite ist insbesondere in einem Bereich des Arbeitsgeräts angeordnet, der beim Abstellen des Arbeitsgeräts auf einem ebenen Boden und/oder beim Herunterfallen des Arbeitsgeräts auf einen ebenen Boden in Kontakt mit dem Boden kommen kann. Die Gehäuseseite ist demnach insbesondere nicht vor Kontakt mit einem ebenen Boden geschützt angeordnet.

Es kann vorteilhaft sein, die eine Seitenwand des Aufnahmeschachtes zu schützen, die einen Boden des Aufnahmeschachtes bildet. Die den Boden des Aufnahmeschachtes überdeckende Gehäuseseite ist entsprechend gestaltet, sodass der Boden des Aufnahmeschachtes in seiner Mitte mit größerem Abstand zu der zumindest einen Gehäuseseite liegt als im Randbereich des Bodens. Grundsätzlich ist ein Fallschutz auch erzielbar, wenn eine der anderen Seitenwände, die nicht den Boden des Aufnahmeschachtes bilden, von einer die Seitenwand überdeckenden Gehäuseseite abgedeckt ist, die in ihrer Mitte mit größerem Abstand zu der Seitenwand liegt als im Randbereich der Seitenwand.

Die zumindest eine Gehäuseseite kann aus einem elastischen und/oder plastischen Material bestehen. Sowohl elastisches Material als auch plastisches Material verformen sich bei Krafteinwirkung und bauen so die bei einem Fall des Arbeitsgerätes auf den Boden auftretenden Kräfte ab. Das elastische Material geht nach Krafteinwirkung weitgehend in seine Ursprungsform zurück, während das plastische Material durch die Krafteinwirkung bleibend verformt wird.

Die zumindest eine Gehäuseseite kann von einer äußeren Abdeckplatte abgedeckt sein. Die Abdeckplatte ist insbesondere auswechselbar am Gehäuse des Arbeitsgerätes gehalten. Hierzu können Clip Halterungen, Schraubbefestigungen oder dgl. vorgesehen sein.

Die Abdeckplatte ist insbesondere in einem Bereich des Arbeitsgeräts angeordnet, der beim Abstellen des Arbeitsgeräts auf einem ebenen Boden und/oder beim Herunterfallen des Arbeitsgeräts auf einen ebenen Boden in Kontakt mit dem Boden kommen kann. Die Abdeckplatte ist demnach insbesondere nicht vor Kontakt mit einem ebenen Boden geschützt angeordnet.

Insbesondere bildet zumindest ein Teil der Abdeckplatte und/oder der Gehäuseseite einen Teil eines Standbereichs, mit dem das Arbeitsgerät auf einem ebenen Boden abgestellt werden kann.

Die Abdeckplatte weist einen Plattenabschnitt auf, der insbesondere etwa ein Zentrum der Abdeckplatte bilden kann. Das Gehäuse hat eine sich in Richtung des Schaftes erstreckende Längsachse, wobei die Abdeckplatte einen Plattenabschnitt aufweist, der in Richtung der Längsachse des Gehäuses gewölbt ausgeführt ist und in Querrichtung zur Längsachse des Gehäuses etwa eben ausgebildet ist. Der Plattenabschnitt bildet eine Standfläche für das Arbeitsgerät.

Um die Standfestigkeit des Arbeitsgerätes auf dem Boden zu erhöhen kann vorgesehen sein, an den in Richtung der Längsachse gegenüberliegenden Rändern des Plattenabschnittes zumindest je einen Abstützdom auszubilden. Der Abstützdom kann über die Plattenebene vorstehen, so dass vorgegebene Aufsetzpunkte für das Arbeitsgerät zum Abstellen auf dem Boden gebildet sind. Für eine hohe Standfestigkeit kann es zweckmäßig sein, dass sich ein Abstützdom über die Länge eines Randes des Plattenabschnittes erstreckt.

Die Anordnung kann so getroffen sein, dass die Abdeckplatte im Bereich des ebenen Plattenabschnitts den geringsten Abstand zu der zumindest einen Gehäuseseite aufweist, insbesondere zu der gewölbten Gehäuseseite.

Für eine starke Absorption auftretender Kräfte zwischen der Abdeckplatte und der zumindest einen Gehäuseseite kann ein energieabsorbierendes Material angeordnet sein. Dies führt dazu, dass sich bei großen Fallhöhen die Abdeckplatte verformt und über das energieabsorbierende Material Kräfte abgefangen werden, bevor diese auf die zumindest eine gewölbte Gehäuseseite einwirken. Als energieabsorbierendes Material kann zum Beispiel ein Federpaket, ein Schaumaterial, ein Gel oder dergleichen energieabsorbierendes Material vorgesehen werden.

In besonderer Ausgestaltung der Erfindung oder als eigenständige Erfindung kann es vorteilhaft sein, den Aufnahmeschacht im Gehäuse des Arbeitsgerätes schwimmend zu lagern. Der Aufnahmeschacht im Gehäuse des Arbeitsgerätes kann somit bei Krafteinwirkung in insbesondere alle drei Raumrichtungen ausweichen. Dies kann zum Beispiel dadurch erreicht werden, dass der Aufnahmeschacht im Gehäuse des Arbeitsgerätes durch mehrere Federpakete gehalten ist. Die Federpakete sind vorteilhaft nicht nur zwischen dem Boden des Aufnahmeschachtes und der gegenüberliegenden Gehäuseseite vorgesehen, sondern auch zwischen allen Seitenwänden des Aufnahmeschachtes und den jeweils gegenüberliegenden Gehäuseseitendes Gehäuses.

Weitere Merkmale der Erfindung ergeben sich aus den weiteren Ansprüchen, der Beschreibung und der Zeichnung, in der Ausführungsbeispiele der Erfindung wiedergegeben sind. Die in den Ansprüchen, der Beschreibung und der Zeichnung offenbarten Merkmale sind zur Beschreibung des Gegenstandes der Erfindung beliebig untereinander kombinierbar.

Die Zeichnungen zeigen:
- Fig. 1: ein Ausführungsbeispiel eines Arbeitsgerätes in Form eines Freischneiders,
- Fig. 2: eine schematische Darstellung der Ausbildung des Aufnahmeschachtes für einen Akkupack in einem Gehäuse des Arbeitsgerätes mit der Anordnung einer gewölbten Gehäuseseite,
- Fig. 3: eine schematische Darstellung nach Fig. 2 mit zwischen einer gewölbten Gehäuseseite und einer Abdeckplatte angeordneten energieabsorbierenden Material, beispielhaft als Federpakete dargestellt,
- Fig. 4: eine schematische Darstellung nach Fig. 3 mit einem Schaummaterial oder einem Gelmaterial als energieabsorbierendes Material zwischen der Abdeckplatte und der gewölbten Gehäuseseite,
- Fig. 5: eine schematische Darstellung nach Fig. 3 mit einem im Gehäuse des Arbeitsgerätes über Federpakete schwimmend gelagerten Aufnahmeschacht für einen Ackupack,
- Fig. 6: einen Längsschnitt durch das Gehäuse eines Arbeitsgerätes mit einem Aufnahmeschacht für einen Akku,
- Fig. 7: einen Schnitt durch das Gehäuse des Arbeitsgerätes nach Fig. 6 längs der Linie VII-VII,
- Fig. 8: in schematischer Darstellung eine alternative Ausbildung des Aufnahmeschachtes für einen Akkupack in einem Gehäuse des Arbeitsgerätes mit der Anordnung einer gewölbten Gehäuseseite.

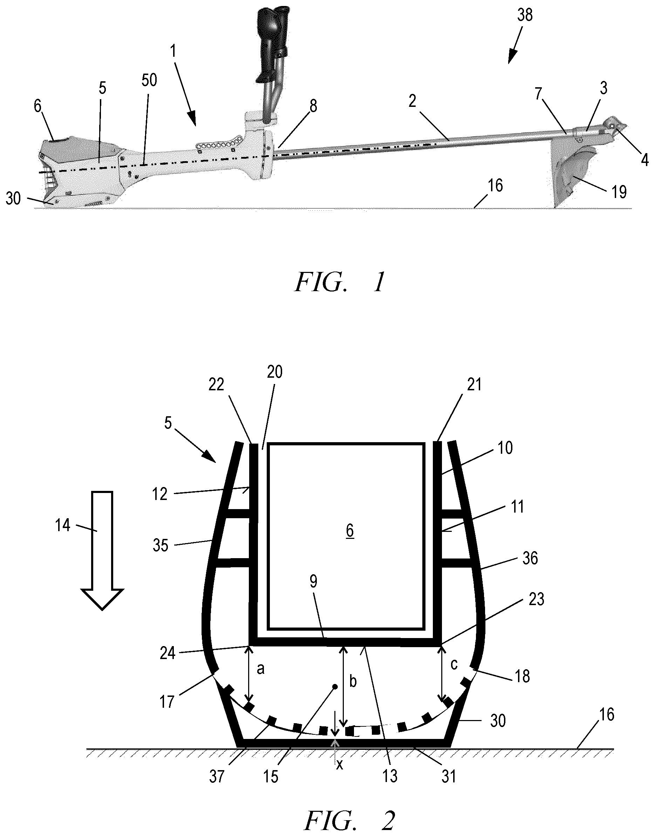

In Fig. 1 ist ein Arbeitsgerät 1 umfassend einen Schaft 2, ein von einem Elektromotor 3 angetriebenes Werkzeug 4 und ein Akkupack 6 zum Antrieb des Elektromotors 3 dargestellt. An dem einen Ende 7 des Schaftes 2 ist das Werkzeug 4 gehalten, während an dem anderen Ende 8 des Schaftes 2 ein Gehäuse 5 mit einem im Gehäuse 5 angeordneten Aufnahmeschacht 10 (Fig. 2) für den Akkupack 6 angeordnet ist. Benachbart zum Werkzeug 4 ist ein Schutz 19 am Schaft 2 fixiert.

In Fig. 1 ist das Arbeitsgerät 1 in einer Abstellposition 38 dargestellt, in der das Arbeitsgerät 1 auf einem ebenen Boden 16 abgestellt ist. In Abstellposition 38 ist das Arbeitsgerät 1 mit einem Standbereich in Kontakt mit dem Boden 16.

Der Schutz 19 bildet im Ausführungsbeispiel einen Teil des Standbereichs.

Im Ausführungsbeispiel bildet eine Abdeckplatte 30 einen Teil des Standbereichs.

Die Abdeckplatte 30 ist so angeordnet, dass sie in Abstellposition 38 und beim Herunterfallen des Arbeitsgeräts 1 auf den ebenen Boden 16 in Kontakt mit dem Boden 16 kommen kann.

In Fig. 2 ist das Gehäuse 5 des Arbeitsgerätes 1 im Schnitt schematisch dargestellt. Der Aufnahmeschacht 10 ist im Gehäuse 5 gehalten. Der Aufnahmeschacht 10 kann starr mit dem Gehäuse 5 verbunden sein. Der Aufnahmeschacht 10 ist durch Seitenwände begrenzt, von denen in Fig. 2 die Seitenwände 11, 12 und 13 dargestellt sind. Im Ausführungsbeispiel nach Fig. 1 bildet die eine Seitenwand 13 den Boden 9 des Aufnahmeschachtes 10. Der - den Boden 9 bildenden - einen Seitenwand 13 gegenüberliegend ist eine Einschuböffnung 20 zum Einsetzen des Akkupacks 6 vorgesehen.

In einem weiteren Ausführungsbespiel bildet eine andere Seitenwand 12 den Boden 9 des Aufnahmeschachtes 10, dem die Einschuböffnung 20 zum Einsetzen des Akkupacks 6 gegenüberliegt.

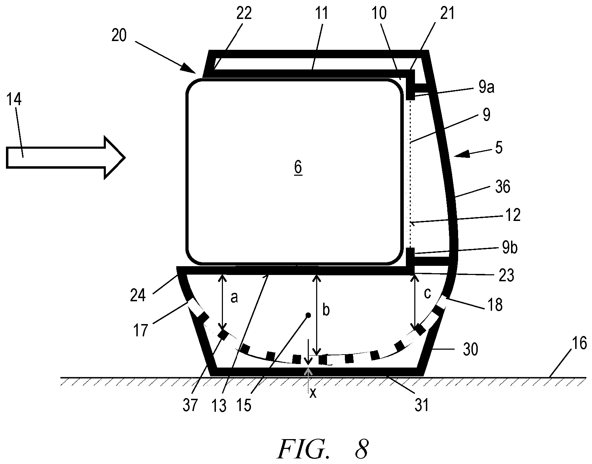

Der Boden 9 des Aufnahmeschachtes 10 muss nicht als flächig geschlossener Boden ausgebildet sein; der Boden kann - wie in Fig. 8 schematisch dargestellt - auch durch zwei Anschläge 9a, 9b definiert werden. Die Anschläge dienen der Begrenzung der Einschubtiefe des Akkupacks 6 in den Aufnahmeschacht 10. Grundsätzlich ist es auch möglich, die Anschläge zur Begrenzung der Einschubtiefe auf einer der Seitenwände des Aufnahmeschachtes 10 anzuordnen, die zur Einschubrichtung (Pfeilrichtung 14) parallel verläuft.

Unabhängig von der Lage der Einschuböffnung 20 zum Einsetzen des Akkupacks 6 in den Aufnahmeschacht 10 ist jede der Seitenwände 11, 12, 13 durch Ränder 21, 22, 23, 24 begrenzt. Dabei bilden im Ausführungsbeispiel nach den Fig. 2 bis 7 die Ränder 21 und 22 der Seitenwände 11 und 12 einen Teil des Öffnungsrandes der Einschuböffnung 20 zum Einsetzen des Akkupacks 6. Im Ausführungsbeispiel nach Fig. 8 bilden die Ränder 22 und 24 der Seitenwände 11 und 13 einen Teil des Öffnungsrandes der Einschuböffnung 20 zum Einsetzen des Akkupacks 6.

Das Gehäuse 5 weist Gehäuseseiten 35, 36, 37 auf, die - zusammen mit weiteren Gehäuseseiten - das Gehäuse 5 bilden. Zumindest eine Gehäuseseite 35, 36, 37 des Gehäuses 5 ist größer als die Seitenwand 11, 12, 13 des Aufnahmeschachtes 10. Im gezeigten Ausführungsbeispiel nach den Fig. 2 bis 7 ist die zumindest eine Gehäuseseite 37 derart vorgesehen, dass sie an den Rändern 23, 24 der einen Seitenwand 13 (im gezeigten Ausführungsbeispiel der Boden 9 des Aufnahmeschachtes 10) einen geringeren Abstand a, c zur Seitenwand 13 aufweist als in einem Bereich 15 zwischen den Rändern 23, 24 der einen Seitenwand 13. Im Bereich 15 hat die Gehäuseseite 37 einen größten Abstand b zu der den Boden 9 des Aufnahmeschachtes 10 bildenden einen Seitenwand 13 des Aufnahmeschachtes 10.

Durch die Anordnung der insbesondere gewölbt ausgebildeten Gehäuseseite 37 gegenüber der Seitenfläche 13 des Aufnahmeschachtes 10 wird erreicht, dass bei einem Fall in Pfeilrichtung 14 der erhabene Bereich 15 der Gehäuseseite 37 den ersten Bodenkontakt mit dem Boden 16 erfährt und sich verformen kann. Dabei ist vorgesehen, dass die Gehäuseseite 37 ohne Kontakt oder zumindest weitgehend ohne Kontakt mit dem Boden 9 des Aufnahmeschachtes 10 bleibt. Die Seitenfläche 13 des Aufnahmeschachtes 10 und damit der Aufnahmeschacht 10 selbst mit einem darin eingeschobenen Akkupack 6 ist bei einem Fall in Pfeilrichtung 14 vor den beim Aufprall auf den Boden 16 auftretenden Kräften geschützt.

Bei der in Fig. 1 dargestellten Ausführung weist das Arbeitsgerät 1 die Abdeckplatte 30 auf, die in Abstellposition 38 einen Teil des Standbereichs des Arbeitsgeräts 1 beim Abstellen auf dem ebenen Boden 16 bildet. In einer alternativen Ausführungsform bildet die Gehäuseseite 37 einen Teil des Standbereichs des Arbeitsgeräts 1, mit dem das Arbeitsgerät 1 in Abstellposition 38 in Kontakt mit einem ebenen Boden 16 ist.

Die Abdeckplatte 30 ist insbesondere so angeordnet, dass sie beim Herunterfallen des Arbeitsgeräts 1 auf den ebenen Boden 16 in Kontakt mit dem Boden 16 kommen kann.

Es kann insbesondere vorgesehen sein, dass das Arbeitsgerät 1 in alternativer Ausführung keine Abdeckplatte 30 aufweist.

Wie in Fig. 2 dargestellt, hat die zumindest eine Gehäuseseite 37 eine gewölbte Grundform, insbesondere eine stetig gewölbte Grundform. Insbesondere hat die zumindest eine Gehäuseseite eine konvexe Grundform. Um die beim Fall auftretenden Kräfte zu dämpfen und/oder zu absorbieren ist insbesondere vorgesehen, die zumindest eine Gehäuseseite 37 aus einem elastischen und/oder plastischen Material auszubilden. Die aus einem elastischen und oder plastischen Material ausgebildete Gehäuseseite 37 geht an ihren Rändern 17 und 18 in die insbesondere aus steifem Material gebildeten Seitenwände 35 und 36 des Gehäuses 5 des Arbeitsgerätes über. Die beim Aufprall auf dem Boden 16 auftretenden Kräfte werden in die Randbereiche des Gehäuses 5 eingeleitet.

Die Abdeckplatte 30 ist so angeordnet, dass sie in Abstellposition 38 oder beim Herunterfallen des Arbeitsgeräts 1 auf einen ebenen Boden 16 in Kontakt mit dem ebenen Boden 16 kommen.

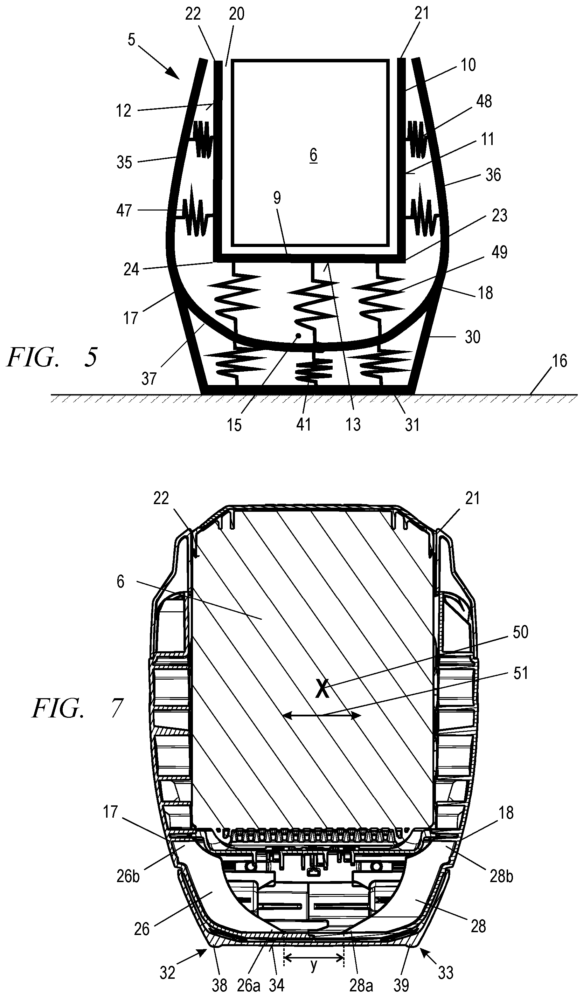

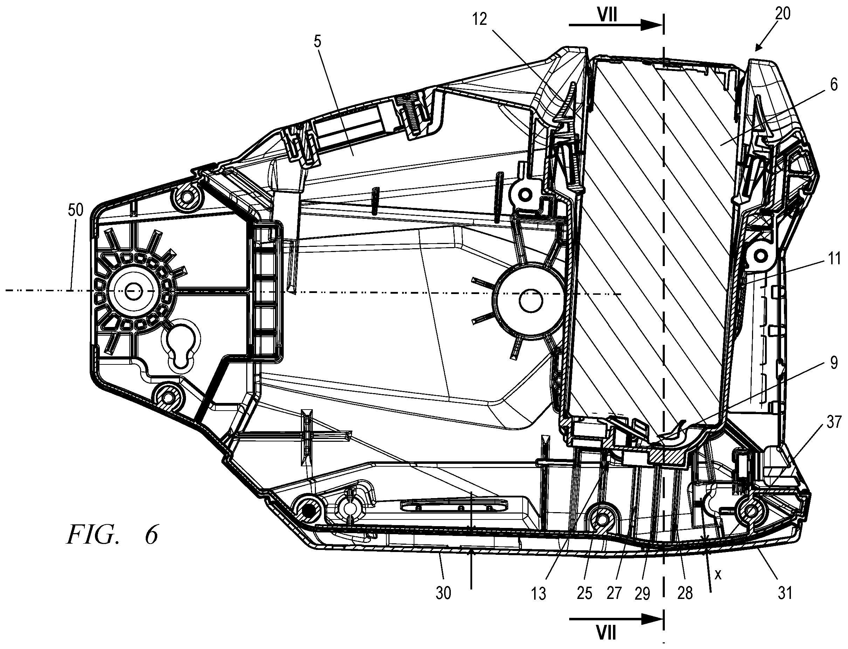

In besonderer Ausgestaltung der Erfindung ist die gewölbte Gehäuseseite 37 von der Abdeckplatte 30 abgedeckt. Die Abdeckplatte 30 ist insbesondere auswechselbar außen am Gehäuse gehalten und kann so bei Verschleiß getauscht werden. Das Gehäuse 5 des Arbeitsgerätes 1 weist eine sich in Richtung des Schaftes 2 erstreckende Längsachse 50 auf. In besonderer Ausgestaltung der Erfindung hat die Abdeckplatte 30 einen in Richtung der Längsachse 50 des Gehäuses 5 gewölbten Plattenabschnitt 31 (Fig.6), der in Querrichtung zur Längsachse 50 des Gehäuses 5 etwa eben ausgebildet ist (Fig. 7). Der vorzugsweise ebene Plattenabschnitt 31 hat einen geringsten Abstand x zu der zumindest einen, gewölbten Gehäuseseite 37. Der Plattenabschnitt 31 kann als Standfläche des Arbeitsgerätes 1 auf dem Boden 16 dienen.

Die Gehäuseseite 37 befindet sich in einem Bereich des Arbeitsgeräts 1, der - bei fehlender Abdeckplatte 30 - in Kontakt mit dem Boden 16 kommen kann.

Wie insbesondere in Fig. 7 dargestellt, kann der Plattenabschnitt 31 an seinen in Richtung der Längsachse 50 gegenüberliegenden Rändern 32, 33 zumindest je eine Erhebung aufweisen, die im Ausführungsbeispiel jeweils als Abstützdom 38, 39 ausgebildet sind. Die Erhebungen bzw. die als Abstützdome 38, 39 ausgebildeten Erhebungen stehen über die Plattenebene vor, so dass vorgegebene Aufsetzpunkte für das Arbeitsgerät 1 zum Abstellen auf dem Boden 16 gebildet sind. Für eine hohe Standfestigkeit kann es zweckmäßig sein, dass sich ein Abstützdom 38, 39 über die Länge eines Randes 32, 33 des Plattenabschnittes 31 erstreckt.

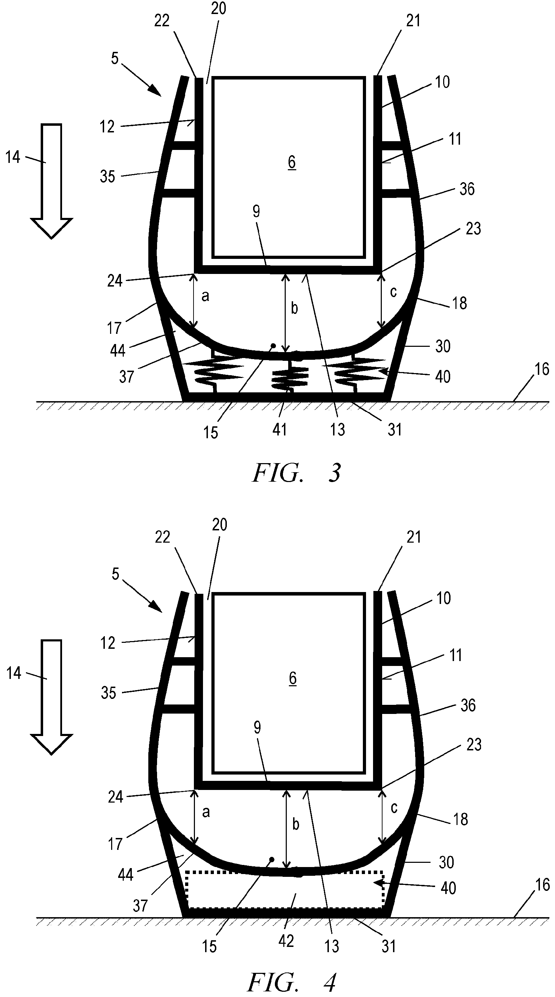

Es kann vorteilhaft sein, wie in den Fig. 3 und 4 dargestellt, zwischen der Abdeckplatte 30 und der zumindest einen Gehäuseseite 37 ergänzend ein energieabsorbierendes Material 40 anzuordnen. Das energieabsorbierende Material kann den Raum 44 zwischen der Abdeckplatte 30 und der gewölbten Gehäuseseite 37 teilweise, insbesondere vollständig ausfüllen. Eine teilweise Füllung des Raums 44 hat den Vorteil, dass das energieabsorbierende Material 40 bei Krafteinwirkung fließen kann.

Wie Fig. 3 zeigt, kann als energieabsorbierendes Material 40 ein Federpaket 41 vorgesehen sein. In Fig. 4 ist das energieabsorbierende Material 40 als Einlage aus Schaummaterial 42 vorgesehen. In gleicher Weise ist eine Einlage aus Gel oder dergleichen geeignet.

In Fig. 5 ist eine besondere Ausgestaltung des Gehäuses 5 des Arbeitsgerätes 1 dargestellt, das eine Weiterbildung der vorstehenden Ausführungsbeispiele oder auch eine eigenständige Erfindung darstellt. Wie gezeigt, ist der Aufnahmeschacht 10 innerhalb des Gehäuses 5 des Arbeitsgerätes 1 schwimmend gelagert. Der Aufnahmeschacht 10 ist seitlich über Federpakete 47 und 48 und gegen der gewölbten Gehäuseseite 37 des Gehäuses 5 über ein Federpaket 49 abgestützt. Die Federpakete sind vorteilhaft nicht nur zwischen den Seitenwänden 11, 12, 13 des Aufnahmeschachtes 10 und der jeweils gegenüberliegenden Gehäuseseite 35, 36, 37 vorgesehen, sondern auch zwischen allen vier Seitenwänden des Aufnahmeschachtes 10 und den jeweils gegenüberliegenden Gehäuseseiten. Die gewölbte Gehäuseseite 37 ist wiederum durch die Abdeckplatte 30 mit einem wie vorstehend beschriebenen Plattenabschnitt 31 abgedeckt, wobei zwischen der Abdeckplatte 30 und der gewölbten Gehäuseseite 37 ein weiteres Federpaket 41 angeordnet sein kann.

In Fig. 6 ist der Längsschnitt durch ein Gehäuse 5 eines Arbeitsgerätes 1 gezeigt. Für gleiche Teile sind gleiche Bezugszeichen wie in den Fig. 1 bis 5 verwendet. Wie im rechten Teil des Schnittes dargestellt, sind im Raum zwischen der - beispielhaft den Boden 9 bildenden - Seitenwand 13 und der Gehäuseseite 37 Rippen 25, 27, 29, 28 angeordnet, die der Versteifung dienen. Wie der Darstellung nach Fig. 7 zu entnehmen, liegen die Rippen 26, 28 in Querrichtung 51 einander gegenüber. Der Rippenfuß 26a der Rippe 26 hat zum Rippenfuß28a der Rippe 28 einen Abstand y. Die Nachgiebigkeit der gewölbten Gehäuseseite 37 wird so nur gering beeinträchtigt. Die Rippen 26 und 28 werden über die Höhe vom Rippenfuß 26a, 28a bis zum Rippengipfel 26b, 28b schmaler und enden im Randbereich des Gehäuses 5 an den Rändern 17, 18 der Gehäuseseite. Die Rippen leiten auftretende Kräfte in den Randbereich des Gehäuses 5 ab.

Fig. 6 zeigt, dass der Plattenabschnitt 31 der Abdeckplatte 30 in Richtung der Längsachse 50 des Gehäuses 5 gewölbt ist. Fig. 7 zeigt, dass der Plattenabschnitt 31 in Querrichtung zur Längsachse 50 des Gehäuses 5 etwa eben ausgebildet ist. Der Plattenabschnitt 31 hat einen geringsten Abstand x zu der zumindest einen, gewölbten Gehäuseseite 37. Der Plattenabschnitt 31 kann als Standfläche des Arbeitsgerätes 1 auf dem Boden 16 dienen.

Auch wenn in den gezeigten Ausführungsbeispielen der Akkuschacht 10 mit vier Seitenwänden und einem Boden 9 beschrieben ist, müssen die Seitenwände und der Boden 9 nicht körperlich ausgeführt sein. Es kann ausreichend sein, als Seitenwand Führungsschienen anzuordnen, die eine virtuelle Seitenwand aufspannen.

In Fig. 8 ist in schematischer Darstellung eine alternative Ausbildung des Aufnahmeschachtes 10 für einen Akkupack 6 in einem Gehäuse 5 des Arbeitsgerätes 1 gezeigt. Für gleiche Teile sind gleiche Bezugszeichen wie in den Fig. 1 bis 7 verwendet.

Im Unterschied zu den Ausführungsbeispielen der Fig. 2 bis 7 liegt die Einschuböffnung 20 des Aufnahmeschachtes 10 seitlich angeordnet. Die Einschuböffnung 20 in Fig. 8 ist im Vergleich zu der Einschuböffnung 20 in den Fig. 2 bis 7 um die Längsachse 50 (Fig.1, 6) um 90° gedreht. Die gewölbte Gehäuseseite 37 ist an der Seitenwand 13 des Aufnahmeschachtes 10 angeordnet.

Die gewölbte Gehäuseseite 37 des Gehäuses 5 ist größer als die Seitenwand 13 des Aufnahmeschachtes 10 ausgebildet. An den Rändern 23, 24 der Seitenwand 13 liegt die gewölbte Gehäuseseite 37 mit einem geringeren Abstand a, c zur Seitenwand 13 als in einem Bereich 15 zwischen den Rändern 23, 24 der einen Seitenwand 13. Im Bereich 15 hat die Gehäuseseite 37 einen größten Abstand b zu der Seitenwand 13 des Aufnahmeschachtes 10.

In Fig. 8 ist ferner der der Einschuböffnung 20 gegenüberliegende Boden 9 auf einen oder zwei Anschläge 9a, 9b reduziert. Die Anschläge 9a, 9b entsprechen dem strichliert dargestellten Boden 9. Der oder die Anschläge 9a, 9b können auch auf zumindest einer der parallel zur Einschubrichtung (Pfeilrichtung 14) des Akkupacks 6 in den Aufnahmeschacht 10 liegenden Seitenwände vorgesehen sein, von denen in Fig. 8 die Seitenwände 11 und 13 gezeigt sind. Ein auf einer Seitenwand angeordneter Anschlag kann im Aufnahmeschacht 10 im Einschubweg des Akkupacks 6 angeordnet sein. Der Aufnahmeschacht 10 kann so auf beiden Gehäuseseiten mit je einer Öffnung ausgebildet sein. Eine oder beide Öffnungen können als Einschuböffnung 20 für den Akkupack 6 ausgebildet sein.

Die vorstehend zu Ausführungsbeispielen der Fig. 1 bis 7 gemachten Ausführungen gelten entsprechend für das Ausführungsbeispiel nach Fig. 8. Die zu den Ausführungsbeispielen der Fig. 1 bis 7 genannten Merkmale gelten entsprechend für das Ausführungsbeispiel nach Fig. 8.

## Patentansprüche

1. Arbeitsgerät umfassend einen Schaft (2), ein von einem Elektromotor (3) angetriebenes Werkzeug (4) und einen Akkupack (6) für den Elektromotor (3), wobei der Schaft (2) an einem Ende (7) das Werkzeug (4) trägt und am anderen Ende (8) ein Gehäuse (5) mit einen im Gehäuse (5) angeordneten Aufnahmeschacht (10) für den Akkupack (6) aufweist, und der Aufnahmeschacht (10) durch Seitenwände (11, 12, 13) begrenzt ist, wobei jede Seitenwand (11, 12, 13) des Aufnahmeschachtes (10) durch einen Rand (21, 22, 23, 24) begrenzt ist, und mit zumindest einer Gehäuseseite (37) des Gehäuses (5), die mit Abstand zu einer Seitenwand (13) des Aufnahmeschachtes (10) liegt,
**dadurch gekennzeichnet, dass** die zumindest eine Gehäuseseite (37) größer ist als die eine Seitenwand (13) des Aufnahmeschachtes (10), und die zumindest eine Gehäuseseite (37) an den Rändern (23, 24) der einen Seitenwand (13) einen geringeren Abstand (a, b) zur Seitenwand (13) aufweist als in einem Bereich (15) zwischen den Rändern (23, 24) der einen Seitenwand (13).

2. Arbeitsgerät nach Anspruch 1,
**dadurch gekennzeichnet, dass** die zumindest eine Gehäuseseite (37) des Gehäuses (5) eine gewölbte Grundform aufweist.

3. Arbeitsgerät nach einem der vorhergehenden Ansprüche,
**dadurch gekennzeichnet, dass** die zumindest eine Gehäuseseite (37) des Gehäuses (5) eine stetig gewölbte Grundform aufweist, insbesondere eine konvexe Grundform aufweist.

4. Arbeitsgerät nach einem der vorhergehenden Ansprüche,
**dadurch gekennzeichnet, dass** eine Seitenwand (12, 13) des Aufnahmeschachtes (10) den Boden (9) des Aufnahmeschachtes (10) bildet.

5. Arbeitsgerät nach einem der vorhergehenden Ansprüche,
**dadurch gekennzeichnet, dass** die zumindest eine Gehäuseseite (37) aus einem elastischen und/oder plastischen Material (40) besteht.

6. Arbeitsgerät nach einem der vorhergehenden Ansprüche,
**dadurch gekennzeichnet, dass** die zumindest eine Gehäuseseite (37) von einer äußeren Abdeckplatte (30) abgedeckt ist.

7. Arbeitsgerät nach einem der vorhergehenden Ansprüche,
**dadurch gekennzeichnet, dass** die Abdeckplatte (30) auswechselbar am Gehäuse (5) gehalten ist.

8. Arbeitsgerät nach einem der vorhergehenden Ansprüche,
**dadurch gekennzeichnet, dass** das Gehäuse (5) eine sich in Richtung des Schaftes (2) erstreckende Längsachse (50) aufweist, und die Abdeckplatte (30) einen in Richtung der Längsachse (50) des Gehäuses (5) gewölbten Plattenabschnitt (31) aufweist, der in Querrichtung zur Längsachse (50) des Gehäuses (5) etwa eben ausgebildet ist.

9. Arbeitsgerät nach einem der vorhergehenden Ansprüche,
**dadurch gekennzeichnet, dass** der Plattenabschnitt (31) an seinen in Richtung der Längsachse (50) gegenüberliegenden Rändern (32, 33) zumindest je einen Abstützdom (38, 39) aufweist, die über die Plattenebene (34) vorstehen.

10. Arbeitsgerät nach einem der vorhergehenden Ansprüche,
**dadurch gekennzeichnet, dass** die Abdeckplatte (30) im Bereich des Plattenabschnittes (31) einen geringsten Abstand (x) zu der zumindest einen Gehäuseseite (37) aufweist.

11. Arbeitsgerät nach einem der vorhergehenden Ansprüche,
**dadurch gekennzeichnet, dass** zwischen der Abdeckplatte (30) und der zumindest einen Gehäuseseite (37) ein energieabsorbierendes Material (40) angeordnet ist.

12. Arbeitsgerät nach Anspruch 11,
**dadurch gekennzeichnet, dass** das energieabsorbierende Material ein Federpaket (41) oder ein Schaummaterial (42) oder ein Gel oder dgl. energieabsorbierendes Material ist.

13. Arbeitsgerät, insbesondere nach einem der vorhergehenden Ansprüche,
**dadurch gekennzeichnet, dass** der Aufnahmeschacht (10) im Gehäuse (5) des Arbeitsgerätes (1) schwimmend gelagert ist.

14. Arbeitsgerät nach einem der vorhergehenden Ansprüche,
**dadurch gekennzeichnet, dass** der Aufnahmeschacht (10) im Gehäuse (5) durch Federpakete (47, 48, 49) gehalten ist.
